# EUROPÄISCHE PATENTSCHRIFT

(11) **EP 1 677 082 B1**
(45) Veröffentlichungstag und Bekanntmachung des Hinweises auf die Patenterteilung: **25.08.2010**
(21) Anmeldenummer: 05020655.6
(22) Anmeldetag: 22.09.2005
(51) Int. Cl.: G01D 18/00

(54) **Verfahren zur Durchführung eines Funktionstests einer Positionsmesseinrichtung und Positionsmesseinrichtung zur Durchführung dieses Verfahrens**
Method for conducting a functional test of a position measuring device and a position measuring device for carrying out this method
Procédé de réalisation d'un test de fonctionnement d'un dispositif de mesure de position et dispositif de mesure de position destiné à la réalisation de ce procédé

(30) Priorität: 22.12.2004 DE 102004063230
(43) Veröffentlichungstag der Anmeldung: 05.07.2006
(73) Patentinhaber: Dr. Johannes Heidenhain GmbH, 83292 Traunreut (DE)
(72) Erfinder: Strasser, Erich, 83308 Trostberg (DE)

(56) Entgegenhaltungen:
- EP-A- 1 614 990
- US-A- 5 687 103

## Beschreibung

Die Erfindung betrifft ein Verfahren zur Durchführung eines Funktionstests für eine Positionsmesseinrichtung nach dem Oberbegriff des Patentanspruchs 1 und eine Positionsmesseinrichtung zur Durchführung dieses Verfahrens nach dem Oberbegriff des Patentanspruchs 10, wie z.B. offenbart in EP-A-1 614 990.

Eine Positionsmesseinrichtung umfasst eine Positionserfassungseinheit zur Generierung von Positionsdatenworten, die an eine Verarbeitungseinheit der Positionsmesseinrichtung abgegeben werden und aus denen in der Verarbeitungseinheit Positionswerte erzeugt werden. Die Generierung der Positionsdatenworte mittels der Positionserfassungseinheit erfolgt dabei durch Abtastung, z. B. optische Abtastung, einer Maßverkörperung (Messteilung) mittels eines Messwertaufnehmers der Positionserfassungseinheit während einer Relativbewegung der Positionserfassungseinheit bezüglich der Maßverkörperung. Arbeitet der Messwertaufnehmer der Positionserfassungseinheit beispielsweise in bekannter Weise nach einem magnetischen oder optischen Abtastprinzip, so umfasst er magnetische Detektoren bzw. optische Detektoren (Fotodetektoren), die bei Abtastung der zugeordneten Maßverkörperung (Messteilung) elektrische Signale erzeugen, welche als digitale Positionsdatenworte zur Erzeugung von Positionswerten an die Verarbeitungseinheit weitergeleitet werden.

Indem die Positionserfassungseinheit einerseits und die Maßverkörperung andererseits an je einem von zwei zueinander beweglichen Objekten, z. B. in Form von Maschinenteilen einer Werkzeugmaschine, angeordnet werden, lässt sich hiermit die jeweilige Position des einen Objektes bezüglich des anderen Objektes erfassen, und zwar in Abhängigkeit von der Typ der Maßverkörperung entweder in Form einer Absolutposition (bei Verwendung einer durch eine Codespur gebildeten Maßverkörperung) oder in Form relativer Positionsänderungen (bei Verwendung einer inkrementellen, periodischen Messteilung als Maßverkörperung). In Abhängigkeit von der Art der Bewegung der beiden Objekte zueinander kann die Positionsmesseinrichtung einerseits zur Längenmessung oder andererseits zur Winkelmessung ausgebildet sein.

Um sicher zu stellen, dass die in der Verarbeitungseinheit aus den Positionsdatenworten erzeugten und zur Auswertung an eine der Positionsmesseinrichtung nachgeordnete Auswerteeinheit (Folgeelektronik) weiterzuleitenden Positionswerte nicht aufgrund elektronischer Fehlfunktionen bzw. Störungen verfälscht werden, wird bei der Positionsmessung eine Funktionsprüfung durchgeführt, indem in der Positionsmesseinrichtung zusätzlich zu den Positionswerten mindestens ein Kontrollwert erzeugt wird, der einen definierten mathematischen Zusammenhang zu einem der Positionswerte aufweist, wobei in diesen mathematischen Zusammenhang ein Korrekturwert eingeht, der in einem Speicher der Positionsmesseinrichtung gespeichert ist.

Der Kontrollwert wird zusammen mit den Positionswerten zu der der Positionsmesseinrichtung nachgeschalteten Auswerteeinheit (Folgeelektronik) übertragen, bei der es sich beispielsweise um einen Bestandteil einer Maschinensteuerung handeln kann, die in Abhängigkeit von den in der Positionsmesseinrichtung erzeugten Positionswerten eine Werkzeugmaschine steuert. In der Auswerteeinheit und bei einigen Anwendungen auch schon in der Positionsmesseinrichtung selbst können hierzu aus mehreren einzelnen Positionswerten zusammengesetzte bzw. abgeleitete Werte, wie z.B. Geschwindigkeitswerte als Änderung der einzelnen Positionswerte mit der Zeit und Beschleunigungswerte als Änderung der einzelnen Geschwindigkeitswerte mit der Zeit, gebildet werden. Vorliegend soll der Begriff "Positionswerte" daher auch die jeweils aus mehreren einzelnen Positionswerten zusammengesetzten bzw. abgeleiteten Werte wie Geschwindigkeit, Beschleunigung und Ruck umfassen. Hauptanwendungsgebiet ist aber die Übertragung einzelner Positionswerte im engeren Sinne von der Positionsmesseinrichtung an die Auswerteeinheit, wo aus diesen dann ggf. weitere für die Steuerung bzw. Regelung einer Maschine erforderliche Größen, wie z.B. Geschwindigkeit und Beschleunigung, gebildet werden.

In der Auswerteeinheit (Folgeelektronik) wird auch überprüft, ob zwischen dem Kontrollwert und dem zugeordneten Positionswert der erwartete mathematische Zusammenhang besteht, und zwar unter Verwendung des in dem Speicher der Positionsmesseinrichtung gespeicherten Korrekturwertes, der hierzu an die Folgeelektronik übertragen wird. So werden etwa die in einer Positionsmesseinrichtung erzeugten Positionswerte regelmäßig mit einem Offset in Form einer so genannten Nullpunktverschiebung beaufschlagt, bevor der jeweilige Positionswert an die Folgeelektronik weitergeleitet wird. Hierdurch kann für jede Art der Anordnung der Positionsmesseinrichtung an einer Werkzeugmaschine oder dergl. eine definierte Referenzposition (so genannte Null-Position) erzeugt werden. Eine geeignete Nullpunktverschiebung wird in der Regel bei der Erstinbetriebnahme einer Positionsmesseinrichtung bestimmt.

Neben dem mit der Nullpunktverschiebung beaufschlagten Positionswerten lassen sich in der Positionsmesseinrichtung als Kontrollwerte bezeichnete zweite Positionswerte erzeugen, die nicht mit der Nullpunktverschiebung beaufschlagt sind und die sich jeweils auf denselben Positionsmesswert (also dasselbe Positionsdatenwort) beziehen wie je einer der mit der Nullpunktverschiebung beaufschlagten (eigentlichen) Positionswerte. Der jeweilige Kontrollwert und der zugeordnete Positionswert werden dabei bevorzugt unabhängig zueinander erzeugt.

Indem sowohl die mit der Nullpunktverschiebung beaufschlagten Positionswerte als auch die nicht mit der Nullpunktverschiebung beaufschlagten Kontrollwerte zu einer der Positionsmesseinrichtung nachgeordneten Folgeelektronik übertragen werden, kann dort ein Vergleich zwischen den einzelnen Positionswerten und einem jeweils zugeordneten (also sich auf dasselbe vom Messwertaufnehmer erzeugte Positionsdatenwort beziehenden) Kontrollwert durchgeführt werden. Durch den Vergleich einander zugeordneter Kontrollwerte und Positionswerte in der Folgeelektronik kann überprüft werden, ob zwischen diesen der erwartete mathematische Zusammenhang besteht, und zwar unter Verwendung des in diesen mathematischen Zusammenhang eingehenden Korrekturwertes, der hierzu aus dem Speicher der Positionsmesseinrichtung ausgelesen wird.

Bei dieser Funktionsprüfung können allerdings solche Fehler nicht erkannt werden, die auf einem Hardwaredefekt bestimmter Speicherzellen des Speichers der Positionsmesseinrichtung beruhen. Denn eine Verfälschung des Korrekturwertes aufgrund eines Hardwaredefektes im Speicher der Positionsmesseinrichtung wirkt sich bei der Erzeugung des Kontrollwertes in der Positionsmesseinrichtung in gleicher Weise aus wie bei der späteren Überprüfung des mathematischen Zusammenhanges zwischen einem Positionswert und dem zugeordneten Kontrollwert in der nachgeordneten Folgeelektronik.

Der Erfindung liegt daher das Problem zugrunde, ein Verfahren zur Funktionsprüfung einer Positionsmesseinrichtung der eingangs genannten Art im Hinblick auf seine Zuverlässigkeit weiter zu verbessern.

Dieses Problem wird erfindungsgemäß durch die Schaffung eines Verfahrens mit den Merkmalen des Patentanspruchs 1 gelöst.

Danach wird der Korrekturwert in der Positionsmesseinrichtung unter zwei unterschiedlichen Speicheradressen, d. h. je einmal in zwei unterschiedlichen Speicherzellen, abgelegt, wobei zur Generierung des Kontrollwertes in der Positionsmesseinrichtung auf den unter einer ersten Speicheradresse in der einen Speicherzelle abgespeicherten Korrekturwert zugegriffen wird und bei Überprüfung des mathematischen Zusammenhanges zwischen dem Kontrollwert und dem zugeordneten Positionswert in der Folgeelektronik auf den unter einer zweiten Speicheradresse in der anderen Speicherzelle gespeicherten Korrekturwert zugegriffen wird.

Da ein Hardwaredefekt in dem Speicher der Positionsmesseinrichtung die unter verschiedenen Speicheradressen in unterschiedlichen Speicherzellen gespeicherten Korrekturwerte in der Regel in unterschiedlicher Weise beeinflusst, kann ein Defekt des Speichers der Positionsmesseinrichtung bei erfindungsgemäßer Ausführung der Funktionsprüfung daran erkannt werden, dass der bei Erzeugung des Kontrollwertes in der Positionsmesseinrichtung verwendete mathematische Zusammenhang zum zugehörigen Positionswert in der nachgeordneten Folgeelektronik nicht nachvollzogen werden kann; denn der jeweils in den mathematischen Zusammenhang als Parameter eingehende Korrekturwert, der in der Positionsmesseinrichtung einerseits und der Folgeelektronik andererseits unterschiedlichen Speicherzellen des hierfür vorgesehenen Speichers entnommen wird, weist bei Verwendung in der Positionsmesseinrichtung einerseits und in der Folgeelektronik andererseits aufgrund des Auslesens aus unterschiedlichen Speicherzellen bei Vorliegen eines Hardwaredefektes im Speicher nicht denselben Wert auf.

Die beiden Speicheradressen, unter denen einerseits der von der Positionsmesseinrichtung bei der Erzeugung der Positionswerte bzw. Kontrollwerte verwendete Korrekturwert und andererseits der identische, von der Folgeelektronik bei der Überprüfung des mathematischen Zusammenhanges zwischen Kontrollwert und zugeordnetem Positionswert verwendete Korrekturwert abgelegt sind, können dabei zu ein und derselben Speichereinheit gehören, also in zwei unterschiedlichen Speicherzellen ein und desselben Datenspeichers abgelegt sein, wobei die zugehörigen Speicheraddressen auf je eine dieser Speicherzellen weisen. Hierbei handelt es sich bevorzugt um einen nicht flüchtigen Speicher (EEPROM).

Der mathematische Zusammenhang zwischen einem Positionswert und dem jeweils zugeordneten Kontrollwert kann in einfacher Weise durch einen Offset gebildet sein, d.h., der Positionswert und der zugeordnete Kontrollwert unterscheiden sich durch einen additiven Parameter, z. B. die vorstehend erwähnte Nullpunktverschiebung.

Eine Positionsmesseinrichtung, mit der das erfindungsgemäße Verfahren ausgeführt werden kann, ist durch die Merkmale des Patentanspruchs 10 charakterisiert.

Bevorzugte Ausgestaltungen dieser Positionsmesseinrichtung sind in den von Patentanspruch 10 abhängigen Patentansprüchen angegeben.

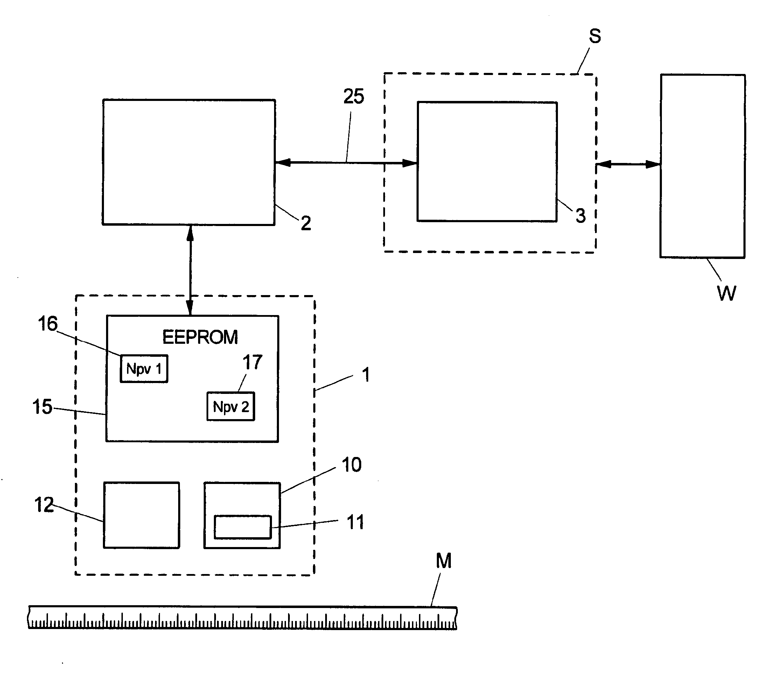

Weitere Einzelheiten und Vorteile der Erfindung werden bei der nachfolgenden Beschreibung eines Ausführungsbeispieles anhand der Figur deutlich werden.

In der Figur ist eine Positionsmesseinrichtung 1 dargestellt, die über einen Kommunikationsbaustein 2 und eine diesem nachgeschaltete Schnittstelle 25 mit einer Folgeelektronik 3 verbunden ist.

Die Positionsmesseinrichtung 1 umfasst eine Positionserfassungseinheit 10 mit einem Messwertaufnehmer 11, der zur Abtastung einer Maßverkörperung (Messteilung M) nach einem magnetischen, optischen oder sonstigen geeigneten physikalischen Prinzip ausgebildet ist und der bei Abtastung der Messteilung M (digitale) Positionsdatenworte erzeugt, die die räumliche Position der Positionserfassungseinheit 10 bezüglich der zugeordneten Messteilung M repräsentieren.

Die Positionsmesseinrichtung 1 weist ferner eine Verarbeitungseinheit 12 auf, in der aus den vom Messwertaufnehmer 11 der Positionserfassungseinheit 10 beim Abtasten einer zugeordneten Messteilung M generierten Signalen (Positionsdatenworten) Positionswerte erzeugt werden, die die räumliche Lage des Messwertaufnehmers bezüglich der zugeordneten Messteilung M angeben. Darüber hinaus weist die Positionsmesseinrichtung 1 einen Speicherbereich 15 auf, in dem unter anderem Werte für eine Nullpunktverschiebung Npv gespeichert sind, die für die Erzeugung der Positionswerte verwendet werden.

Über die vorstehend erwähnten Komponenten 10, 11, 12, 15 hinaus enthält eine Positionsmesseinrichtung üblicherweise noch weitere elektronische Baugruppen, auf die jedoch bei der nachfolgenden Beschreibung eines Funktionstests der Positionsmesseinrichtung nicht eingegangen werden wird. Für weitere Einzelheiten hinsichtlich des Aufbaus einer Positionsmesseinrichtung wird beispielhaft auf das Fachbuch von Alfons Ernst, *Digitale Längen- und Winkelmesstechnik,* Verlag Moderne Industrie (1989) verwiesen.

Bei einer Positionsmessung, d. h. bei Abtastung einer zugeordneten Messteilung durch den Messwertaufnehmer 11 der Positionserfassungseinheit 10, wobei die Messteilung einerseits und die Positionserfassungseinheit 10 andererseits an je einem von zwei zueinander beweglichen Objekten angeordnet sind, werden Positionsdatenworte generiert, aus denen in der Verarbeitungseinheit 12 Positionswerte erzeugt werden. Die einzelnen Positionswerte werden bei ihrer Erzeugung aus den Positionsdatenworten jeweils mit einem definierten Offset in Form einer Nullpunktverschiebung additiv beaufschlagt, die bei Inbetriebnahme der Positionsmesseinrichtung 1 bestimmt und in dem Speicherbereich 15 abgelegt wurde.

Dabei wird vorliegend die Nullpunktverschiebung Npv in dem Speicherbereich 15 unter zwei verschiedenen Adressen, d. h. in zwei unterschiedlichen Speicherzellen 16, 17 abgelegt, so dass ein und dieselbe Nullpunktverschiebung Npv wahlweise unter einer von zwei unterschiedlichen Speicheradressen abgerufen bzw. aus einer von zwei unterschiedlichen Speicherzellen 16, 17 ausgelesen werden kann. Im Folgenden wird die aus der einen Speicherzelle 16 auslesbare Nullpunktverschiebung als Npv1 bezeichnet und die aus der anderen Speicherzelle 17 auslesbare Nullpunktverschiebung als Npv2. Die Werte Npv1 und Npv2 sind an sich identisch, da sie ein und dieselbe Nullpunktverschiebung repräsentieren; sie können jedoch bei einem Defekt des Speicherbereiches 15 auch unterschiedliche Werte annehmen, was ein Erkennen eines solchen Defektes ermöglicht.

In der Positionsmesseinrichtung 1 werden zusätzlich zu den mit der Nullpunktverschiebung beaufschlagten Positionswerten auch Kontrollwerte erzeugt, die je einem der Positionswerte zugeordnet sind und sich von diesem dadurch unterscheiden, dass sie nicht mit der Nullpunktverschiebung beaufschlagt sind. Mit anderen Worten ausgedrückt werden in der Positionsmesseinrichtung 1 aus einem von dem Messwertaufnehmer 11 generierten Positionsdatenwort unabhängig voneinander jeweils ein mit der Nullpunktverschiebung beaufschlagter additiv Positionswert sowie ein nicht mit der Nullpunktverschiebung beaufschlagter Kontrollwert erzeugt. Zwischen einem Positionswert und dem jeweils zugeordneten Kontrollwert besteht somit ein definierter mathematischer Zusammenhang, nämlich ein (konstanter) Offset gegeben durch die Nullpunktverschiebung, so dass die Different zwischen einem jeweiligen Positionswert P und einem zugeordneten Kontrollwert K gleich der Nullpunktverschiebung Npv ist, also P - K = Npv, wobei Npv den Wert der Nullpunktverschiebung unabhängig von der Art ihrer Speicherung in der Speichereinheit 15 angibt. Dabei wird in der Positionsmesseinrichtung 1 zur Beaufschlagung der Positionswerte mit der Nullpunktverschiebung auf die in einer ersten Speicherzelle abgelegte, unter einer ersten Speicheradresse 16 abrufbare Nullpunktverschiebung Npv1 zugegriffen, die ggf. durch einen Hardwaredefekt der Speichereinheit 15 verfälscht sein kann.

Die in der Positionsmesseinrichtung 1 in der vorbeschriebenen Weise erzeugten Positionswerte sowie die einzelnen Positionswerten zugeordneten Kontrollwerte, die sich von ersteren um einen konstanten Offset in Form einer Nullpunktverschiebung Npv1 unterscheiden, werden über einen der Positionsmesseinrichtung 1 zugeordneten Kommunikationsbaustein 2 sowie eine diesem nachgeordnete Schnittstelle 25 hintereinander zu einer Folgeelektronik 3 übertragen, die einen Bestandteil einer Maschinensteuerung S bildet, in der die Positionswerte zur Steuerung einer Werkzeugmaschine W ausgewertet werden.

In der Folgeelektronik 3 wird ein Funktionstest durchgeführt, um die korrekte Erzeugung der Positionswerte in der Positionsmesseinrichtung 1 sowie die korrekte Übertragung der Positionswerte über den Kommunikationsbaustein 2 und die Schnittstelle 25 zu der Folgeelektronik 3 zu prüfen. Hierzu wird in der Folgeelektronik 3 geprüft, ob zwischen einem Positionswert und dem jeweils zugeordneten Kontrollwert der zu erwartende, vorgegebene mathematische Zusammenhang besteht, also vorliegend ein konstanter Offset in Form einer Nullpunktverschiebung. Zur Überprüfung dieses mathematischen Zusammenhangs wird in der Folgeelektronik die Differenz zwischen einem jeweiligen Positionswert und dem zugeordneten Kontrollwert gebildet und abgefragt, ob diese Differenz dem erwarteten Offset entspricht. Hierzu wird als Offset nicht die unter der ersten Speicheradresse in einer ersten Speicherzelle 16 des Speicherbereiches 15 abgelegte Nullpunktverschiebung Npv1 verwendet, sondern vielmehr die in einer anderen Speicherzelle 17 des Speicherbereiches 15 unter einer anderen Speicheradresse abgelegte Nullpunktverschiebung Npv2. Diese kann hierzu beim Einschalten der Positionsmesseinrichtung 1 von der Folgeelektronik 3 aus dem Speicherbereich 15 ausgelesen werden. Es wird also in der Folgeelektronik 3 geprüft, ob P - K = Npv2.

Entspricht die in der Folgeelektronik 3 ermittelte Differenz zwischen einem Positionswert und dem zugeordneten Kontrollwert nicht dem erwarteten Offset, also nicht der Nullpunktverschiebung Npv2, so weist dies auf einen Fehler bei der Erzeugung der Positionswerte in der Positionsmesseinrichtung 1 oder bei der Übertragung der Positionswerte von der Positionsmesseinrichtung 1 zu der Folgeelektronik 3 hin. Dabei werden auch solche Fehler erkannt, die zu einer Verfälschung der bei der Erzeugung der Positionswerte verwendeten Nullpunktverschiebung Npv1 führen, also etwa ein Hardwaredefekt im Speicherbereich 15, indem zur Überprüfung des erwarteten mathematischen Zusammenhanges zwischen einem jeweiligen Positionswert und dem zugehörigen Kontrollwert in der Folgeelektronik 3 ein in einer anderen Speicherzelle 17 des Speicherbereiches 15 abgelegter Wert Npv2 für die identische Nullpunktverschiebung herangezogen wird. Denn ein Hardwaredefekt, der eine Verfälschung des Inhaltes der Speicherzellen des Speicherbereiches 15 zur Folge hat, wird sich in der Regel nicht in identischer Weise auf sämtliche Speicherzellen im Speicherbereich 15 auswirken.

## Patentansprüche

1. Verfahren zur Durchführung eines Funktionstests einer Positionsmesseinrichtung, die bei Abtastung einer Maßverkörperung mittels einer Positionserfassungseinheit Positionswerte erzeugt, wobei zur Funktionsprüfung
a) in der Positionsmesseinrichtung mindestens ein Kontrollwert erzeugt wird, der einen definierten mathematischen Zusammenhang zu einem der Positionswerte aufweist, in den als Parameter ein in der Positionsmesseinrichtung gespeicherter Korrekturwert eingeht,
b) der Kontrollwert zusammen mit dem zugeordneten Positionswert an eine der Positionsmesseinrichtung nachgeordnete Auswerteeinheit übertragen wird und
c) in der Auswerteeinheit das Vorliegen des mathematischen Zusammenhanges zwischen dem Kontrollwert und dem Positionswert überprüft wird,
**dadurch gekennzeichnet,**
**dass** der Korrekturwert (Npv1, Npv2) in der Positionsmesseinrichtung (1) unter zwei verschiedenen Speicheradressen abgelegt ist und dass die Positionsmesseinrichtung (1) zur Bildung eines definierten mathematischen Zusammenhanges zwischen dem Kontrollwert und dem zugeordneten Positionswert auf den Korrekturwert (Npv1) unter der einen Speicheradresse zugreift und die Auswerteeinheit (3) bei der Prüfung des Vorliegens des mathematischen Zusammenhanges zwischen dem Kontrollwert und dem zugeordneten Positionswert auf den Korrekturwert (Npv2) unter der anderen Speicheradresse zugreift.

2. Verfahren nach Anspruch 1, **dadurch gekennzeichnet, dass** der mindestens eine Kontrollwert und der zugeordnete Positionswert in der Positionsmesseinrichtung (1) aus einem mittels eines Messwertaufnehmers (11) der Positionsmesseinrichtung (1) bei Abtastung einer zugeordneten Maßverkörperung generierten Positionsdatenwort unabhängig voneinander erzeugt werden.

3. Verfahren nach Anspruch 1 oder 2, **dadurch gekennzeichnet, dass** die beiden Speicheradressen, unter denen der Korrekturwert (Npv1, Npv2) abgelegt ist, je einer Speicherzelle (16, 17) einer Speichereinheit (15) zugeordnet sind.

4. Verfahren nach Anspruch 3, **dadurch gekennzeichnet, dass** die Speichereinheit (15) durch einen nicht flüchtigen Speicher gebildet wird.

5. Verfahren nach einem der vorhergehenden Ansprüche, **dadurch gekennzeichnet, dass** der unter der anderen Speicheradresse gespeicherte Korrekturwert (Npv2) bei Inbetriebnahme der Positionsmesseinrichtung (1) an die Auswerteeinheit (3) übergeben wird.

6. Verfahren nach einem der vorhergehenden Ansprüche, **dadurch gekennzeichnet, dass** sich der mindestens eine Kontrollwert und der zugeordnete Positionswert durch einen additiven Wert unterscheiden, der durch den Korrekturwert (Npv1, Npv2) bestimmt wird.

7. Verfahren nach Anspruch 6, **dadurch gekennzeichnet, dass** der Korrekturwert eine Nullpunktverschiebung der Positionswerte repräsentiert.

8. Verfahren nach einem der vorhergehenden Ansprüche, **dadurch gekennzeichnet, dass** die Verarbeitungseinheit (3) Bestandteil einer Steuereinrichtung (S) ist, die die Positionswerte zur Erzeugung von Steuersignalen auswertet.

9. Verfahren nach Anspruch 8, **dadurch gekennzeichnet, dass** die Steuereinrichtung (S) zur Steuerung einer Werkzeugmaschine (W) verwendet wird.

10. Positionsmesseinrichtung, insbesondere zur Durchführung des Verfahrens nach einem der vorhergehenden Ansprüche, mit
- einer Positionserfassungseinheit (10) und einer zugeordneten Verarbeitungseinheit (12) zur Erzeugung von Positionswerten und von Kontrollwerten bei Abtastung einer Maßverkörperung (M), wobei die Kontrollwerte einen definierten mathematischen Zusammenhang zu je einem der Positionswerte aufweisen,
- einer Speichereinheit (15) zur Speicherung eines Korrekturwertes, der als Parameter in den mathematischen Zusammenhang zwischen einander zugeordneten Positionswerten und Kontrollwerten eingeht, und
- einer der Positionsmesseinrichtung (1) nachgeschalteten Auswerteeinheit (3) zum Überprüfen des mathematischen Zusammenhanges zwischen den Kontrollwerten und den Positionswerten,
**dadurch gekennzeichnet,**
**dass** der Korrekturwert (Npv1, Npv2) in der Speichereinheit (15) unter zwei verschiedenen Speicheradressen abgelegt ist, so dass die Positionsmesseinrichtung (1) zur Bildung eines definierten mathematischen Zusammenhanges zwischen einem Kontrollwert und dem zugeordneten Positionswert auf den Korrekturwert (Npv1) unter der einen Speicheradresse zugreifen kann und die Auswerteeinheit (3) zur Prüfung des mathematischen Zusammenhanges zwischen dem Kontrollwert und dem zugeordneten Positionswert auf den Korrekturwert (Npv2) unter der anderen Speicheradresse zugreifen kann.

11. Positionsmesseinrichtung nach Anspruch 10, **dadurch gekennzeichnet, dass** die beiden Speicheradressen, unter denen der Korrekturwert (Npv1, Npv2) abgelegt ist, auf je eine Speicherzelle (16, 17) der Speichereinheit (15) weisen.

12. Positionsmesseinrichtung nach Anspruch 11, **dadurch gekennzeichnet, dass** die Speichereinheit (15) durch einen nicht flüchtigen Speicher gebildet wird.

13. Positionsmesseinrichtung nach einem der Ansprüche 10 bis 12, **dadurch gekennzeichnet, dass** die Verarbeitungseinheit (3) Bestandteil einer elektronischen Steuereinrichtung (S) ist, die die Positionswerte zur Erzeugung von Steuersignalen auswertet.

14. Positionsmesseinrichtung nach Anspruch 13, **dadurch gekennzeichnet, dass** die Steuereinrichtung (S) zur Steuerung einer Werkzeugmaschine (W) ausgebildet und vorgesehen ist.

## Claims

1. A method for carrying out a functional test of a position measuring device, which generates position values in response to the scanning of a material measure by means of a position detection unit, wherein, for testing the function,
a) at least one control value, which encompasses a defined mathematical correlation to one of the position values, is generated in the position measuring device, with a correction value, which is stored in the position measuring device, being counted as a parameter,
b) the control value together with the assigned position value is transferred to an evaluation unit, which is arranged downstream from the position measuring device and
c) the presence of the mathematical context between the control value and the position measuring value is reviewed in the evaluation unit,
**characterized in**
**that** the correction value (Npv1, Npv2) is stored in the position measuring device (1) under two different memory addresses and in that, for the purpose of forming a defined mathematical correlation between the control value and the assigned position value, the position measuring device (1) accesses the correction value (Npv1) under the one memory address and in that, in response to checking for the presence of the mathematical correlation between the control value and the assigned position value, the evaluation unit (3) accesses the correction value (Npv2) under the other memory address.

2. The method according to claim 1, **characterized in that** the at least one control value and the assigned position value are generated independent on one another in the position measuring sensor (1) from a position data word, which is generated by means of a measuring sensor (11) of the position measuring device (1) in response to the scanning of an assigned material measure.

3. The method according to claim 1 or 2, **characterized in that** the two memory addresses under which the correction value (Npv1, Npv2) is stored, are in each case assigned to one storage cell (16, 17) of a storage unit (15).

4. The method according to claim 3, **characterized in that** the storage unit (15) is formed by means of a non-volatile memory.

5. The method according to one of the preceding claims, **characterized in that** the correction value (Npv2) stored under the other memory address is transferred to the evaluation unit (3) in response to the launching of the position measuring device (1).

6. The method according to one of the preceding claims, **characterized in that** the at least one control value and the assigned position value differ by an additive value, which is determined by means of the correction value (Npv1, Npv2).

7. The method according to claim 6, **characterized in that** the correction value represents a zero shift of the position values.

8. The method according to one of the preceding claims, **characterized in that** the processing unit (3) is a component of a control device (S), which evaluates the position values for the purpose of generating control signals.

9. The method according to claim 8, **characterized in that** the control device (S) is used to control a machine tool (W).

10. A position measuring device, in particular for carrying out the method according to one of the preceding claims, comprising
- a position detection unit (10) and an assigned processing unit (12) for generating position values and control values in response to the scanning of a material measure (M), wherein the control values encompass a defined, mathematical correlation to one of the position values, in each case,
- a storage unit (15) for storing a correction value, which is counted as a parameter in the mathematical correlation between position values and control values, which are assigned to one another, and
- an evaluation unit (3) for checking for the mathematical correlation between the control values and the position values, which is connected downstream from the position measuring device (1),
**characterized in**
**that** the correction value (Npv1, Npv2) is stored in the storage unit (15) under two different memory addresses, so that, for the purpose of forming a defined mathematical correlation between the control value and the assigned position value, the position measuring device (1) can access the correction value (Npv1) under the one memory address and in that, for the purpose of checking for the mathematical correlation between the control value and the assigned position value, the evaluation unit (3) can access the correction value (Npv2) under the other memory address.

11. The position measuring device according to claim 10, **characterized in that** the two memory addresses, under which the correction value (Npv1, Npv2) is stored, in each case refer to one storage cell (16, 17) of the storage unit (15).

12. The position measuring device according to claim 11, **characterized in that** the storage unit (15) is formed by means of a non-volatile memory.

13. The position measuring device according to one of claims 10 to 12, **characterized in that** the processing unit (3) is a component of an electronic control device (S), which evaluates the position values for the purpose of generating control signals.

14. The position measuring device according to claim 13, **characterized in that** the control device (S) is embodied and provided to control a machine tool (W).

## Revendications

1. Procédé pour l'exécution d'un test de fonctionnement d'un dispositif de mesure de position produisant des valeurs de position lors du balayage d'une mesure matérialisée au moyen d'une unité de détection de position, dans lequel, pour le contrôle de fonctionnement
a) au moins une valeur de contrôle est produite dans le dispositif de mesure de position, présentant une relation mathématique définie par rapport à l'une des valeurs de position, dans laquelle est prise en compte une valeur de correction enregistrée en tant que paramètre dans le dispositif de mesure de position,
b) la valeur de contrôle, ensemble avec la valeur de position attribuée, est transmise à une unité d'évaluation disposée à la suite du dispositif de mesure de position, et
c) la présence de la relation mathématique entre la valeur de contrôle et la valeur de position est vérifiée dans l'unité d'évaluation,
**caractérisé en ce que**
la valeur de correction (Npv1, Npv2) est déposée dans le dispositif de mesure de position (1) sous deux adresses mémoire différentes, et **en ce que** pour la formation d'une relation mathématique définie entre la valeur de contrôle et la valeur de position attribuée, le dispositif de mesure de position (1) accède à la valeur de correction (Npv1) sous l'une des adresses mémoire, et l'unité d'évaluation (3) accède à la valeur de correction (Npv2) sous l'autre des adresses mémoire lors du contrôle de la présence de la relation mathématique entre la valeur de contrôle et la valeur de position attribuée.

2. Procédé selon la revendication 1, **caractérisé en ce que** l'au moins une valeur de contrôle et la valeur de position attribuée dans le dispositif de mesure de position (1) sont produites indépendamment l'une de l'autre, à partir d'un mot contenant des données de position, qui est généré au moyen d'un capteur de valeur de mesure (11) du dispositif de mesure de position (1), lors du balayage d'une mesure matérialisée attribuée.

3. Procédé selon l'une des revendications 1 ou 2, **caractérisé en ce que** chacune des deux adresses mémoire, sous lesquelles la valeur de correction (Npv1, Npv2) est déposée, est attribuée à une cellule de mémoire (16, 17) d'une unité de mémoire (15).

4. Procédé selon la revendication 3, **caractérisé en ce que** l'unité de mémoire (15) est formée par une mémoire non volatile.

5. Procédé selon l'une des revendications précédentes, **caractérisé en ce que** la valeur de correction (Npv2) enregistrée sous l'autre adresse mémoire est transmise à l'unité d'évaluation (3) lors de la mise en marche du dispositif de mesure de position (1).

6. Procédé selon l'une des revendications précédentes, **caractérisé en ce que** l'au moins une valeur de contrôle et la valeur de position attribuée se distinguent par une valeur additive déterminée par la valeur de correction (Npv1, Npv2).

7. Procédé selon la revendication 6, **caractérisé en ce que** la valeur de correction représente un décalage de l'origine des valeurs de position.

8. Procédé selon l'une des revendications précédentes, **caractérisé en ce que** l'unité de traitement (3) est un composant d'une unité de commande (S) évaluant les valeurs de position pour la production de signaux de commande.

9. Procédé selon la revendication 8, **caractérisé en ce que** l'unité de commande (S) est utilisée pour la commande d'une machine-outil (W).

10. Dispositif de mesure de position, en particulier pour l'exécution du procédé selon l'une des revendications précédentes, avec
- une unité de détection de position (10) et une unité de traitement (12) attribuée, pour la production de valeurs de position et de valeurs de contrôle lors du balayage d'une mesure matérialisée (M), les valeurs de contrôle présentant une relation mathématique définie par rapport à chacune des valeurs de position,
- une unité de mémoire (15) pour la sauvegarde d'une valeur de correction prise en compte en tant que paramètre dans la relation mathématique entre des valeurs de position et des valeurs de contrôle attribuées les unes aux autres, et
- une unité d'évaluation (3) dispose à la suite du dispositif de mesure de position (1), pour le contrôle de la relation mathématique entre les valeurs de contrôle et les valeurs de position,
**caractérisé en ce que**
la valeur de correction (Npv1, Npv2) dans l'unité de mémoire (15) est déposée sous deux adresses mémoire différentes, de sorte que pour la formation d'une relation mathématique définie entre une valeur de contrôle et la valeur de position attribuée, le dispositif de mesure de position (1) peut accéder à la valeur de correction (Npv1) sous l'une des adresses mémoire, et l'unité d'évaluation (3) peut accéder à la valeur de correction (Npv2) sous l'autre adresse mémoire, pour le contrôle de la relation mathématique entre la valeur de contrôle et la valeur de position attribuée.

11. Dispositif de mesure de position selon la revendication 10, **caractérisé en ce que** les deux adresses mémoire, sous lesquelles est déposée la valeur de correction (Npv1, Npv2), indiquent chacune des cellules de mémoire (16, 17) de l'unité de mémoire (15).

12. Dispositif de mesure de position selon la revendication 11, **caractérisé en ce que** l'unité de mémoire (15) est formée par une mémoire non volatile.

13. Dispositif de mesure de position selon l'une des revendications 10 à 12, **caractérisé en ce que** l'unité de traitement (3) est un composant d'une unité de commande électronique (S) évaluant les valeurs de position pour la production de signaux de commande.

14. Dispositif de mesure de position selon la revendication 13, **caractérisé en ce que** l'unité de commande (S) est formée et prévue pour la commande d'une machine-outil (W).
